# EUROPEAN PATENT APPLICATION

(11) **EP 4 517 500 A1**
(43) Date of publication of application: **05.03.2025**
(21) Application number: 23793988.9
(22) Date of filing: 08.03.2023
(51) Int. Cl.: G06F 3/04817, B60R 16/02, G06F 3/01, G06F 3/16

(54) **SPEECH INTERACTION DEVICE AND SPEECH INTERACTION METHOD**

(30) Priority: 27.04.2022 JP 2022073531
(71) Applicant: NISSAN MOTOR CO., LTD., Kanagawa 221-0023 (JP)
(72) Inventor: SHIKODA, Yu, Atsugi-shi, Kanagawa 243-0123 (JP)
(74) Representative: Osha BWB
(86) International application number: PCT/JP2023/008785
(87) International publication number: WO 2023/210171

(57) **Abstract**

A processor (10) recognizes interaction contents of a user before the interruption of a speech interaction, extracts a keyword in the speech interaction before the interruption as a pre-interruption keyword on the basis of the interaction contents, generates an icon image representing the interaction contents before the interruption on the basis of the extracted pre-interruption keyword, and generates a control command to display the generated icon image.

## Description

### Technical Field

The present invention relates to a speech interaction device and a speech interaction method.

The present application claims priority based on Japanese Patent Application No. 2022-73531 filed on April 27, 2022, and for designated countries where incorporation by reference to literature is permitted, the contents described in the above-described application are incorporated herein by reference and made a part of the description herein.

### Background Art

There is a known technique in which, when notification information for a driver is displayed, in a case where the driving load of the driver is higher than a predetermined driving load, the importance is added to the notification information on the basis of a predetermined operation by the driver to restrain the display of the notification information temporarily, and when the notification information is displayed again, the notification information is displayed in accordance with the importance (Patent Document 1).

### Prior Art Document

### Patent Document

Patent Document 1: JP 2020-035262 A

### Summary of Invention

### Problems to Be Solved by Invention

However, the technique according to Patent Document 1 has such a problem that, even when the notification information displayed before the display of the notification information is restrained is displayed again after the restraint, a user has in some cases forgotten the contents of the notification information displayed before the restraint when the notification information is displayed again.

A problem to be solved by the present invention is to provide a speech interaction device and a speech interaction method that enable a user to remember, when the provision of information for the user being interrupted is resumed, the contents of output information before the interruption.

### Means for Solving Problems

The present invention solves the above-described problem by recognizing interaction contents of a user before the interruption of a speech interaction, extracting a keyword in the speech interaction before the interruption as a pre-interruption keyword on the basis of the interaction contents, generating an icon image representing the interaction contents before the interruption on the basis of the extracted pre-interruption keyword, and generating a control command to display the generated icon image.

### Effects of Invention

According to the present invention, it is possible for a user to remember, when the provision of information for the user being interrupted is resumed, the contents of output information before the interruption.

### Brief Description of Drawings

FIG. 1 is a block diagram illustrating an embodiment of a speech interaction system according to the present invention.
FIGS. 2(a) and 2(b) are diagrams illustrating an example of a screen displayed to a user in the present embodiment.
FIGS. 3(a), 3(b), and 3(c) are examples of an icon image having an amount of information that is changed in accordance with the driving load of the user in the present embodiment.
FIGS. 4(a), 4(b), and 4(c) are examples of an icon image that is changed in accordance with topic subjects recognized during the interruption of a speech interaction in the present embodiment.
FIG. 5 is a diagram illustrating an example of a flowchart of a process according to a speech interaction method that is executed by the speech interaction device.

### Mode(s) for Carrying out the Invention

An embodiment of the present invention will be described below with reference to the drawings. A speech interaction system including a speech interaction device according to the present invention is a system that uses a speech recognition technique and a speech synthesis technique to perform a speech interaction with a user. The user refers to a person who uses the speech interaction system. The user is mainly a driver of a vehicle but may be a passenger, other than the driver. A speech interaction system 100 may be a system that is used in a place other than an automobile. The following describes an example in which a driver of a vehicle is assumed to be a user and the present invention is applied to a speech interaction system that performs a speech interaction with the user. However, the present invention is not limited to this and may be applied to a speech interaction system that controls a speech interaction between a user and another user.

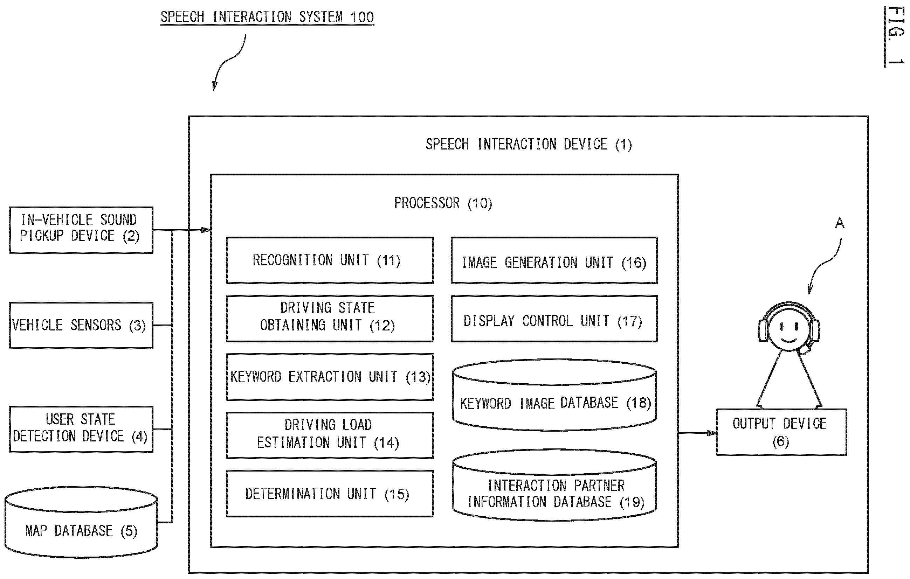

FIG. 1 is a block diagram illustrating an embodiment of a speech interaction system according to the present embodiment. The speech interaction system 100 includes a speech interaction device 1, an in-vehicle sound pickup device 2, vehicle sensors 3, a user state detection device 4, and a map database 5. These devices and the database are provided in a vehicle and are connected together by an in-vehicle LAN, such as a CAN, to be capable of mutually sending and receiving information. The speech interaction device 1 is a device that controls a speech interaction with a user and includes a processor 10 and an output device 6.

The output device 6 is a device that outputs information to the user via an agent function of a personified agent (hereinafter, also simply referred to as an agent A), specifically a medium in which a voice and an image are combined. Note that an electronic device provided in the vehicle is described here as an example of the output device 6. However, the output device 6 is only required to be an electronic device having the agent function. For example, the output device 6 may be a portable electronic device with a display. The function of the agent A pertaining to audio output and video output may be provided in a mobile phone, such as a smartphone. The output device 6 is only required to be capable of presenting information to the user by outputting a voice, an image, character information, and the like. For example, a display of a navigation device may be used to serve also as the output device 6.

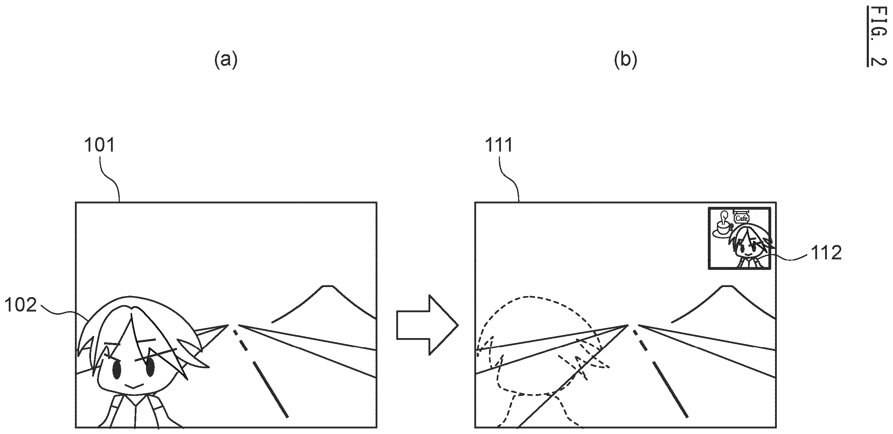

FIGS. 2(a) and 2(b) are diagrams illustrating an example of a screen displayed to the user in the speech interaction system according to the present embodiment. For example, the screen illustrated in FIG. 2 is displayed on a head-up display device or a display device provided in an own vehicle. FIG. 2(a) illustrates an example in which the agent A is visually displayed. As illustrated in FIG. 2(a), the agent A is displayed on a display 101 in such a manner that an agent image 102, which is an avatar designed in imitation of a human being, is displayed superimposed on a scene outside the vehicle. As described above, when outputting communication information to the user, the agent A displays the agent image 102 by using the agent function receiving a control command from a display control unit 17. Via the screen displayed on the display 101, the user can perform a speech interaction while grasping gestures of the agent A, which is a conversation partner.

In addition, the speech interaction device 1 has an interaction interruption function of interrupting the speech interaction with the user. When determining that the speech interaction with the user needs to be interrupted during the speech interaction, the speech interaction device 1 interrupts the speech interaction. As illustrated in FIG. 2(b), the image of the agent A, which is a speech interaction partner of the user, is not displayed during the interruption of the speech interaction. In the present embodiment, as illustrated in FIG. 2(b), an icon image 112 that represents interaction contents before the interruption of the speech interaction is displayed on a display 111 during the interruption of the speech interaction in such a manner that the icon image 112 is displayed superimposed on the scene outside the vehicle. As the contents of the icon image, an illustration, a character, a photograph, and a video that express the interaction contents before the interruption of the speech interaction, the expression of the avatar based on the atmosphere of the speech interaction, and the like are cited. As an example of the interaction contents displayed in the icon, a topic of a cafe, a restaurant, shopping, an event, a tourist site, music, news, weather, scenery, or the like is cited.

In the present embodiment, the speech interaction system is described as an example of an interaction partner of the user. However, the interaction partner is not limited to this and may be a person. For example, the interaction partner is a person outside the vehicle and other than an occupant of the vehicle. In the example in FIG. 2(a), the display of the agent A performing the speech interaction with the user, as an interaction partner, is illustrated as an example. In a case where the interaction partner is a person, a captured image of the interaction partner may be displayed. When determining that the speech interaction is resumed during the interruption of the speech interaction, the speech interaction device 1 resumes the speech interaction. When the speech interaction is resumed, as illustrated in FIG. 2(a), the agent image 102 of the agent A, which is the interaction partner of the user, is displayed again, and the display of the icon image mentioned above is interrupted. Note that the display of the icon image is not limited to being interrupted, and the display of the icon image may be continued after the speech interaction is resumed.

As described above, the agent A includes an audio output unit that outputs a voice or a sound effect, such as a speaker, and a display unit that displays an image including a character, such as a display. The agent A outputs the communication information by providing the user with a voice, a sound effect, and an image including a character, together with an action of the agent A. The personified agent is an example, and the agent may be one displaying a predetermined character, an avatar, or an icon, rather than an agent designed in imitation of a human being. The agent A may be installed in the form of a physical entity that can appear and disappear by the operation of an actuator. Although the display of the agent as a conversation partner is illustrated as an example, the present embodiment can be applied to a speech interaction system that does not display the agent A as a conversation partner.

The in-vehicle sound pickup device 2 picks up a sound that is heard by an occupant in the vehicle. The in-vehicle sound pickup device 2 is, for example, a microphone installed in the vehicle. The sound picked up by the in-vehicle sound pickup device 2 is mainly a sound of which the source is in the interior of the vehicle. The sound includes a voice of the user and a sound output from an in-vehicle medium. The voice of the user includes, for example, a conversation between occupants and an interaction between the speech interaction system and an occupant. The in-vehicle medium is, for example, audio equipment or a radio.

The vehicle sensors 3 obtain vehicle periphery information on the periphery of the vehicle. The vehicle sensors 3 are, for example, an external camera that captures an image of the outside of the vehicle. The external camera is a CCD camera, a CMOS camera, or the like including an image pickup element, such as a CCD or CMOS image sensor. The external camera obtains a captured image of the periphery of the vehicle as vehicle periphery information. The vehicle sensors 3 include a GPS sensor. The GPS sensor detects a current position of the own vehicle. Detection results from the vehicle sensors 3 are output to the processor 10 at predetermined time intervals.

The user state detection device 4 detects information about the state of the user. The state of the user includes, for example, information about the body action of the user. As the user state detection device 4, for example, an internal camera that captures an image of the user in the vehicle, a biological signal measurement sensor that detects a biological signal of the user, and the like are cited. The internal camera is a CCD camera, a CMOS camera, or the like including an image pickup element, such as a CCD or CMOS image sensor. The biological signal measurement sensor is provided inside a steering wheel or a seat and detects the biological signal, such as the blood pressure of the user, a change in the pulse rate of the user, and the degree of perspiration of the user, as information about the body of the user. A detection result from the user state detection device 4 is output to the processor 10 at predetermined time intervals.

The map database 5 is a database that stores map information. The map information includes information on roads and the like. The map database 5 includes information on points of interest (POIs). The POI refers to information on a specific location on a map, for example, a location of a building that serves as a landmark, such as a public facility, an eating house, and a tourist attraction.

The speech interaction device 1 is configured of the processor 10 including a ROM that stores programming for executing various processes, a CPU as an operational circuit that functions as the speech interaction device 1 by executing a program stored in the ROM, and a RAM that functions as an accessible storage device, and the agent A as the output device 6. The processor 10 includes, as functional blocks, a recognition unit 11, a driving state obtaining unit 12, a keyword extraction unit 13, a driving load estimation unit 14, a determination unit 15, an image generation unit 16, and the display control unit 17. The processor 10 includes a keyword image database 18 and an interaction partner information database 19.

The recognition unit 11 recognizes the interaction contents of the user before the interruption of the speech interaction of the user. The recognition unit 11 obtains, from the in-vehicle sound pickup device 2, a voice of the user and/or a voice of the interaction partner of the user before the interruption of the speech interaction. The recognition unit 11 executes a speech recognition process on the obtained voice to recognize the interaction contents of the user. The recognition unit 11 may summarize the interaction contents of the user. The interaction contents of the user include utterance contents of the user before the interruption and utterance contents of the interaction partner of the user before the interruption.

After the icon image is displayed, the recognition unit 11 recognizes at least any one topic subject of conversation contents of the user, in-vehicle content played back in the vehicle, and a vehicle periphery target on the periphery of the vehicle. The topic subjects are candidates for a topic to be provided to the user when the speech interaction with the user is resumed. For example, the topic subjects are subjects in which the user may have an interest. During the interruption of the speech interaction with the user, the user may have an interest in a subject that can be visually or aurally recognized. The user's interest may shift from the interaction contents before the interruption to another subject. Therefore, in the present embodiment, a topic subject in which the user may have an interest during the interruption is recognized.

For example, the recognition unit 11 recognizes the conversation contents of the user. The recognition unit 11 obtains a voice of the user during the interruption of the speech interaction from the in-vehicle sound pickup device 2. The recognition unit 11 executes the speech recognition process on the obtained voice of the user to recognize the conversation contents of the user. The recognition unit 11 may summarize the conversation contents of the user. The conversation contents of the user include the contents of a mid-interruption conversation between the user and another occupant during the interruption of the speech interaction with the user.

The recognition unit 11 recognizes the in-vehicle content that is played back in the vehicle. As the content, for example, music played back by, utterance contents of a radio host from, and the like from the medium such as audio equipment or a radio in the vehicle are cited. The recognition unit 11 obtains a voice of the medium from the in-vehicle sound pickup device 2. The recognition unit 11 executes the speech recognition process on the obtained voice of the medium to recognize the in-vehicle content. The recognition unit 11 may summarize the contents of the in-vehicle content such as the contents of a radio program and utterance contents of a radio host.

The recognition unit 11 recognizes the vehicle periphery target on the basis of information that is detected by the vehicle sensors 3 such as the GPS sensor and the external camera. The vehicle periphery target is, for example, a point of interest (POI) on the periphery of the vehicle. For example, the recognition unit 11 recognizes, as the vehicle periphery target, a POI located on the periphery of the vehicle on the basis of a current position of the own vehicle and the map information in the map database 5. The recognition unit 11 executes an image recognition process on an image of the periphery of the own vehicle captured by the external camera, extracts a feature point of a specified POI, and recognizes the vehicle periphery target.

The driving state obtaining unit 12 obtains, from the user state detection device 4, driving state information that indicates the driving state of the user who drives the vehicle. For example, the driving state information of the user includes the information about the body of the user and information about the action of the user. The information about the body of the user includes the blood pressure of the user, the change in the pulse rate of the user, and the degree of perspiration of the user. The information about the action of the user includes the details of an operation, the expression, the line of sight, the motion, and the like of the user. For example, the driving state obtaining unit 12 obtains the information about the action of the user by executing the image recognition process on an image of the user obtained from the user state detection device 4.

On the basis of the interaction contents before the interruption of the speech interaction recognized by the recognition unit 11, the keyword extraction unit 13 extracts a pre-interruption keyword in the speech interaction before the interruption. For example, on the basis of a summary of the interaction contents, the keyword extraction unit 13 extracts a keyword in the speech interaction before the interruption as the pre-interruption keyword. The keyword extraction unit 13 extracts nouns included in the interaction contents before the interruption as keyword candidates and extracts a keyword candidate having a highest importance as the pre-interruption keyword.

The keyword extraction unit 13 also extracts a keyword of the topic subject on the basis of the conversation contents of the user and/or the in-vehicle content that is recognized by the recognition unit 11 during the interruption of the speech interaction. For example, on the basis of a summary of the conversation contents and the in-vehicle content, the keyword extraction unit 13 extracts a keyword in the conversation contents and the in-vehicle content as the keyword. The keyword extraction unit 13 also extracts a keyword on the basis of the vehicle periphery target that is recognized by the recognition unit 11 during the interruption of the speech interaction. For example, the keyword extraction unit 13 extracts a name of the vehicle periphery target as the keyword from information on the vehicle periphery target.

The driving load estimation unit 14 estimates the driving load of the user on the basis of the driving state of the user. The driving load is a load that the user bears when the user drives the vehicle. As the driving load increases, higher concentration on driving is required of the user as the driver. The driving load estimation unit 14 estimates the driving load on the basis of the state of a driving operation of the user. For example, the driving load estimation unit 14 estimates a higher driving load as the amount of a steering operation or the amount of an operation of a gas pedal or a brake pedal increases.

The driving load estimation unit 14 also estimates the driving load on the basis of the physical state of the user. For example, the driving load estimation unit 14 estimates a higher driving load as the blood pressure or heart rate of the user increases. The driving load estimation unit 14 may estimate the driving load on the basis of the state of an attitude of the user. The driving load estimation unit 14 estimates the movement of the line of sight of the user and estimates a higher driving load as the movement of the line of sight of the user increases.

The driving load estimation unit 14 also estimates the driving load on the basis of the traveling state. The driving load estimation unit 14 estimates a higher driving load when the traveling state of the vehicle is a specific state than when the traveling state is a state other than the specific state. For example, the driving load estimation unit 14 estimates a higher driving load when the vehicle is traveling than when the vehicle is being stopped. The specific state includes a case where the vehicle is traveling on an expressway, a case where the vehicle is turning right or left, and a case where the vehicle is close to an obstacle such as another vehicle.

The determination unit 15 determines whether the speech interaction of the user is interrupted. The determination unit 15 obtains the information about the state of the user from the user state detection device 4 and determines that the speech interaction of the user is interrupted when the state of the user is a state that requires the interruption of the speech interaction. The determination unit 15 determines that the speech interaction of the user is not interrupted when the state of the user is not the state that requires the interruption of the speech interaction. The state that requires the interruption of the speech interaction includes, for example, a case where the driving load of the user has increased. The determination unit 15 determines that the speech interaction of the user is interrupted when the user is in a state of performing a steering operation. The determination unit 15 also determines that the speech interaction of the user is interrupted when the blood pressure or heartbeat of the user is high.

Note that the state that requires the interruption of the speech interaction of the user is not limited to this and includes a case where a driving entity in automated driving has been switched from a system to the driver, a case where the user has got another incoming voice call or video call, a case where the user has performed an operation of interrupting the conversation, and the like. When the user is performing a driving operation, that is, when the driving entity in automated driving has been switched from the system to the user, the determination unit 15 determines, on the basis of a captured image of the user, that the state of the user is the state that requires the interruption of the speech interaction of the user.

The determination unit 15 also determines whether the speech interaction of the user that has been interrupted is resumed. For example, during the interruption of the speech interaction of the user, the determination unit 15 obtains the information about the state of the user in a certain cycle and determines, on the basis of the information about the state of the user, whether the state of the user is a state that allows the speech interaction of the user to be resumed. The state that allows the speech interaction of the user to be resumed includes, for example, a case where the driving load of the user has decreased, a case where the driving entity in automated driving has been switched from the user to the system, and the like.

The image generation unit 16 generates an icon image that represents the contents of a topic of the speech interaction of the user. The icon image includes, for example, a keyword image that corresponds to a keyword in the speech interaction and an interaction partner image that represents the interaction partner of the user. When the speech interaction of the user is interrupted, the image generation unit 16 generates the icon image that represents the interaction contents before the interruption of the speech interaction on the basis of the pre-interruption keyword. On the basis of the pre-interruption keyword, the image generation unit 16 refers to the keyword image database 18 and obtains, from the keyword image database 18, a pre-interruption keyword image that corresponds to the pre-interruption keyword. For example, in a case where a keyword pertaining to a cafe is extracted, the image generation unit 16 obtains an image that represents a cafe, for example, an image of a coffee cup.

The image generation unit 16 also refers to the interaction partner information database 19 and obtains an interaction partner image representing an interaction partner that interacts with the user before the interruption of the speech interaction, such as avatar model data and a character name. The image generation unit 16 then combines the obtained keyword image and interaction partner image to generate an icon image that includes the keyword image and the interaction partner image. Thus, for example, when the speech interaction of the user is interrupted, the image generation unit 16 generates the icon image that represents the interaction contents of the speech interaction before the interruption on the basis of the pre-interruption keyword image and the interaction partner image.

In a case where the interaction contents of the speech interaction of the user pertain to the vehicle periphery target, the image generation unit 16 may obtain an image of the vehicle periphery target captured by the vehicle sensors 3 and generate an icon image that includes the image of the vehicle periphery target. The image generation unit 16 may generate an icon image that does not include the interaction partner image but includes the keyword image.

In the present embodiment, the image generation unit 16 may generate an icon image in accordance with the driving load estimated by the driving load estimation unit 14. For example, the image generation unit 16 generates an icon image having an amount of information based on the driving load. The amount of information of the icon image is set to a smaller value for a higher driving load. The image generation unit 16 determines whether the driving load is higher than a load threshold value during the interruption of the speech interaction of the user. When determining that the driving load is higher than the load threshold value, the image generation unit 16 generates an icon image having an amount of information that is smaller than when determining that the driving load is not higher than the load threshold value. Thus, when the driving load is high, the amount of information displayed to the user can be reduced.

In the present embodiment, when the speech interaction is interrupted, the image generation unit 16 may generate an icon image that has an amount of information based on the driving load and that represents the interaction contents before the interruption, and when the driving load is changed after the icon image is displayed, the image generation unit 16 may replace the icon image displayed to the user with an icon image having an amount of information based on the driving load.

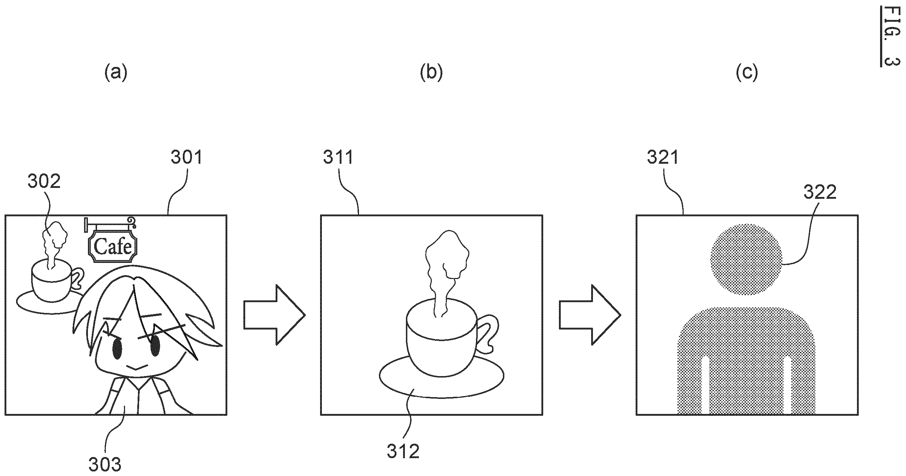

Examples of the icon image that is changed in accordance with the driving load will be described with reference to FIGS. 3(a) to 3(c). FIGS. 3(a) to 3(c) are examples illustrating an icon image having an amount of information that is changed in accordance with the driving load in a case where the user is a driver. FIG. 3(a) is a drawing illustrating an icon image 301 in a case where the driving load of the user is low. The icon image 301 illustrated in FIG. 3(a) is an example of an icon image having a large amount of information displayed to the user. The icon image 301 includes a keyword image 302 that represents the interaction contents before the interruption and an interaction partner image 303 that represents an avatar as a partner of the speech interaction of the user. The keyword image 302 is an example of a keyword image that corresponds to the keyword "cafe." By displaying a larger amount of information, the user can smoothly resume the speech interaction.

In contrast, in a case where the driving load of the user increases during the interruption of the speech interaction of the user, an icon image having a small amount of information displayed to the user is displayed as illustrated in FIG. 3(b). In FIG. 3(b), an icon image 311 is an example of the icon image having a small amount of information displayed to the user. In the icon image 311, the interaction partner image is not displayed, and a keyword image 312 that represents the interaction contents before the interruption is displayed. In a case where the driving load further increases, an image having a smaller amount of information displayed to the user is displayed as illustrated in FIG. 3(c). In FIG. 3(c), an icon image 321 includes only an image 322 indicating that the speech interaction was performed. The image 322 is only required to be an image indicating that the speech interaction was performed. For example, the image 322 may be an icon of an application with which the speech interaction was performed. This can prevent the user from being distracted by the display of the icon image.

In the present embodiment, during the interruption of the speech interaction of the user, the icon image displayed to the user may be updated on the basis of at least any one topic subject of the conversation contents of the user, the in-vehicle content, and the vehicle periphery target. For example, after the icon image is displayed, the image generation unit 16 determines whether the recognition unit 11 has recognized any topic subject. When determining that any topic subject has been recognized, the image generation unit 16 determines whether the importance of the recognized topic subject is higher than an importance threshold value. The importance is set in advance for each topic subject, for example. As it is more likely that a topic subject is a candidate for a topic in the speech interaction of the user, the importance of the topic subject is set to a higher value.

When determining that the importance of the topic subject is higher than the importance threshold value, the image generation unit 16 generates a new icon image on the basis of a topic image representing a topic subject whose importance is determined to be higher than the importance threshold value and replaces the icon image displayed to the user with the generated icon image. The image generation unit 16 obtains the topic image representing the topic subject. For example, the image generation unit 16 obtains, as the topic image, a keyword image that corresponds to a keyword in the topic subject from the keyword image database 18. The image generation unit 16 may obtain a captured image of the vehicle periphery target as the topic image. The image generation unit 16 generates an icon image that includes the topic image. At this time, the image generation unit 16 may generate an icon image that includes the topic image and the interaction partner image.

During the interruption of the speech interaction of the user, every time the recognition unit 11 recognizes a topic subject, the image generation unit 16 determines whether the importance of the topic subject is higher than the importance threshold value until the speech interaction of the user is resumed. When the importance is higher than the importance threshold value, the image generation unit 16 generates an icon image that includes a topic image representing the topic subject.

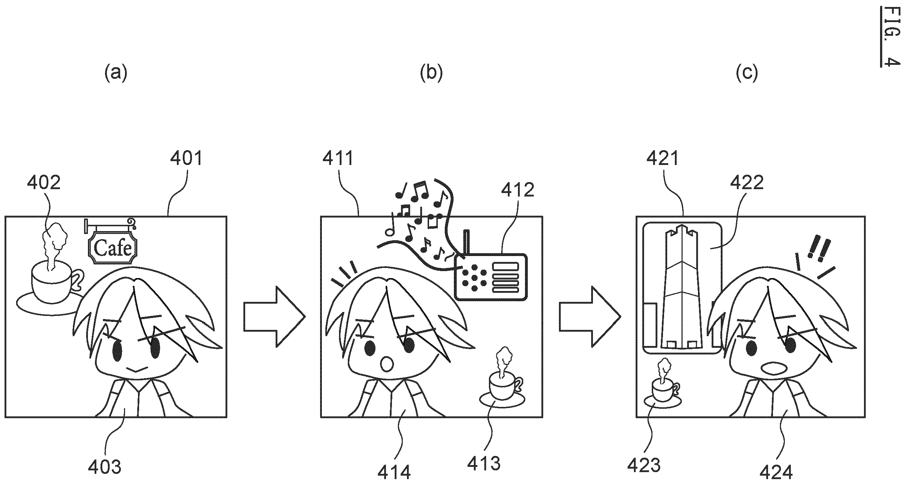

Examples of an icon image that is changed in accordance with topic subjects recognized during the interruption of the speech interaction of the user will be described with reference to FIGS. 4(a) to 4(c). FIGS. 4(a) to 4(c) are examples of the icon image that is updated in accordance with the recognized topic subjects during the interruption of the speech interaction of the user. FIG. 4(a) is an example of a pre-interruption icon image that is displayed to the user immediately after the interruption of the speech interaction of the user. An icon image 401 includes a pre-interruption keyword image 402 and an interaction partner image 403.

Meanwhile, in a case where the speech interaction of the user is interrupted for a long time, it is possible that the interest of the user changes. Therefore, in the present embodiment, the icon image displayed to the user is updated on the basis of information on the conversation contents of the user, the in-vehicle content, or the vehicle periphery target. FIG. 4(b) illustrates an icon image that is updated on the basis of the in-vehicle content. An icon image 411 includes a keyword image 412 of the in-vehicle content and an interaction partner image 414. The in-vehicle content is music that is being played on audio equipment. For example, the icon image 411 illustrates a situation in which an avatar displayed as the interaction partner image 414 shows an interest in the music played on audio equipment.

FIG. 4(c) illustrates an icon image that is further updated after the icon image in FIG. 4(b) is displayed. In FIG. 4(c), an icon image 421 includes a keyword image 422 that represents the vehicle periphery target and an interaction partner image 424. For example, the icon image 421 illustrates a situation in which an avatar displayed as the interaction partner image 424 shows an interest in the vehicle periphery target. Note that, as illustrated in a pre-interruption keyword image 413 in FIG. 4(b) and a pre-interruption keyword image 423 in FIG. 4(c), the pre-interruption keyword image may be shrunk and displayed in the icon image also after the icon image is updated.

The display control unit 17 performs control of displaying the icon image generated by the image generation unit 16 to the user. The display control unit 17 generates a control command to display the icon image to the user and sends the generated control command to the output device 6. When receiving the control command, the output device 6 outputs output data including the icon image as the communication information, using the agent function of the agent A. The present embodiment is not limited to displaying the icon image by the output device 6, and a communication device outside the speech interaction device 1 may display the icon image. The communication device is, for example, a device such as a smartphone and a tablet terminal used by the user. In this case, the display control unit 17 outputs the control command to the communication device.

As described above, when the speech interaction of the user is interrupted, the display control unit 17 displays, to the user, an icon image that represents the interaction content before the interruption during the interruption of the speech interaction. Thus, the user can see the icon image to remember the interaction contents before the interruption even during the interruption of the speech interaction and can start the speech interaction smoothly when the speech interaction is resumed.

The keyword image database 18 is a database that stores keyword images corresponding to keywords in the speech interaction for each of the keywords. In the present embodiment, data for keyword images corresponding to keywords is stored in advance. For example, an image that represents a cafe, for example, an image of a coffee cup is stored for the keyword "cafe." For example, the keyword image database 18 stores an image representing a specific landmark for a keyword pertaining to the landmark.

The interaction partner information database 19 is a database that stores interaction partner information of the user for each interaction partner. The interaction partner information is, for example, an interaction partner image that represents an interaction partner. The interaction partner information database 19 stores, for example, an image that expresses an avatar of the agent A and a captured image of an interaction partner of the user.

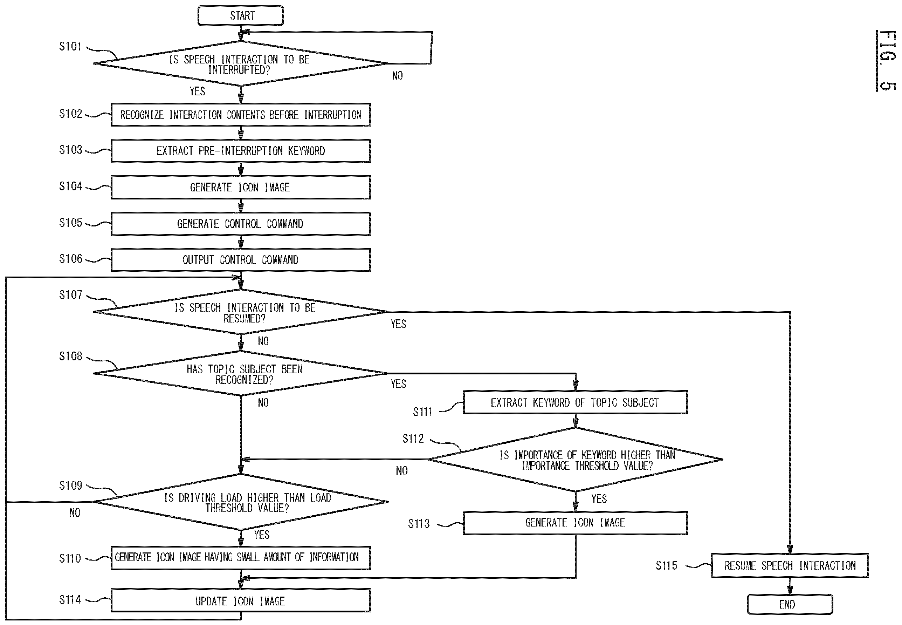

Next, with reference to FIG. 5, an example that shows a procedure of control for executing a speech interaction method according to the present embodiment will be described.

FIG. 5 is an example of a flowchart illustrating the procedure of the control according to the speech interaction method. While the user performs the speech interaction, the processor 10 starts a process from step S101.

In step S101, the processor 10 determines whether the speech interaction of the user is interrupted. When determining that the speech interaction is interrupted, the processor 10 proceeds to step S102. When not determining that the speech interaction is interrupted, the processor 10 returns to step S101 and repeats the subsequent process. In step S102, the processor 10 recognizes the interaction contents before the interruption. In step S103, the processor 10 extracts a pre-interruption keyword on the basis of the interaction contents before the interruption.

In step S104, the processor 10 generates an icon image that includes a pre-interruption keyword image corresponding to the pre-interruption keyword and an interaction partner image representing an interaction partner of the user in the speech interaction before the interruption. For example, the processor 10 obtains the pre-interruption keyword image from the keyword image database 18 on the basis of the pre-interruption keyword and refers to the interaction partner information database 19 to obtain the interaction partner image. The processor 10 then combines the pre-interruption keyword image and the interaction partner image to generate an icon image.

In step S105, the processor 10 generates a control command to display the icon image to the user. In step S106, the processor 10 outputs the control command generated in step S105 to the output device 6. When receiving the control command, the output device 6 displays the icon image to the user. In step S107, the processor 10 determines whether the speech interaction of the user is resumed. When determining that the speech interaction of the user is resumed, the processor 10 proceeds to step S115. When determining that the speech interaction of the user is not resumed, the processor 10 proceeds to step S108.

In step S108, the processor 10 determines whether at least any one topic subject of conversation contents of the user, in-vehicle content, and a vehicle periphery target has been recognized. When determining that no topic subject has been recognized, the processor 10 proceeds to step S109. When determining that any topic subject has been recognized, the processor 10 proceeds to step S111. In step S109, the processor 10 determines whether the driving load of the user is higher than the load threshold value. When determining that the driving load of the user is higher than the load threshold value, the processor 10 proceeds to step S110. In step S110, the processor 10 generates an icon image having a small amount of information. When determining that the driving load of the user is not higher than the load threshold value, the processor 10 returns to step S107 and repeats the subsequent process.

In step S111, the processor 10 extracts a keyword of the recognized topic subject. In step S112, the processor 10 determines whether the importance of the keyword extracted in step S111 is higher than the importance threshold value. When determining that the importance of the keyword of the topic subject is higher than the importance threshold value, the processor 10 proceeds to step S113. In step S113, the processor 10 generates an icon image including the topic subject. For example, the processor 10 generates an icon image that includes a topic image representing the topic subject and the interaction partner image. When determining that the importance of the keyword of the topic subject is not higher than the importance threshold value, the processor 10 proceeds to step S109.

In step S114, the processor 10 replaces the icon image displayed to the user with the generated icon image. For example, the processor 10 replaces the displayed icon image with the icon image generated in step S110 or the icon image generated in step S113. The processor 10 performs display control of displaying the newly generated icon image to the user. After updating the icon image in step S114, the processor 10 returns to step S107 and repeats the subsequent process. In step S115, the processor 10 resumes the speech interaction of the user.

As described above, in the present embodiment, when the speech interaction is interrupted, the interaction contents of the user before the interruption of the speech interaction are recognized, the keyword in the speech interaction before the interruption is extracted as the pre-interruption keyword on the basis of the interaction contents, the icon image representing the interaction contents before the interruption is generated on the basis of the extracted pre-interruption keyword, and the control command to display the generated icon image is generated. Thus, it is possible to resume interrupted provision of information for the user in a state where the user remembers information that has been provided before the interruption.

In the present embodiment, the pre-interruption keyword image corresponding to the pre-interruption keyword is obtained from the database that stores keyword images corresponding to keywords in the speech interaction for each of the keywords, the interaction partner image representing the interaction partner that interacts with the user before the interruption of the speech interaction is obtained, and the icon image including the pre-interruption keyword image and the interaction partner image is generated. Thus, it is possible to generate an icon image that appropriately represents the interaction contents and the interaction partner before the interruption.

In the present embodiment, after the icon image is displayed, at least any one topic subject of the conversation contents of the user, the in-vehicle content played back in the vehicle, and the vehicle periphery target on the periphery of the vehicle is recognized, it is determined whether the importance of the recognized topic subject is higher than the importance threshold value, and the icon image displayed to the user is updated on the basis of the topic image representing the topic subject whose importance is determined to be higher than the importance threshold value. Thus, when the interaction of the user is resumed, it is possible to resume the interaction with the contents of a topic in which the user is interested.

In the present embodiment, the driving state information indicating the driving state of the user who drives the vehicle is obtained, the driving load of the user is estimated on the basis of the driving state after the icon image is displayed, it is determined whether the driving load is higher than the load threshold value, and when it is determined that the driving load is higher than the load threshold value, the icon image having an amount of information based on the driving load is generated. Thus, when the driving load on the user is high, it is possible to prevent the user from being distracted by the display of the icon.

The embodiment explained above has been described to facilitate understanding of the present invention and has not been described to limit the present invention. It is therefore meant that the constituent elements disclosed in the above embodiment include all design changes and equivalents that fall within the technical scope of the present invention.

### Description of Reference Numerals

- 100: speech interaction system
- 1: speech interaction device
- 10: processor
- 11: recognition unit
- 12: driving state obtaining unit
- 13: keyword extraction unit
- 14: driving load estimation unit
- 15: determination unit
- 16: image generation unit
- 17: display control unit
- 2: in-vehicle sound pickup device
- 3: vehicle sensors
- 4: user state detection device
- 5: map database
- 6: output device
- A: agent

## Claims

1. A speech interaction device comprising a processor for controlling a speech interaction of a user, the processor comprising:
a recognition unit configured to recognize interaction contents of the user before interruption of the speech interaction;
a keyword extraction unit configured to extract, on a basis of the interaction contents, a keyword in the speech interaction before the interruption as a pre-interruption keyword;
an image generation unit configured to generate, on a basis of the extracted pre-interruption keyword, an icon image representing the interaction contents before the interruption; and
a display control unit configured to generate a control command to display the generated icon image.

2. The speech interaction device according to claim 1, wherein
the image generation unit is configured to:
obtain a pre-interruption keyword image corresponding to the pre-interruption keyword from a database which stores keyword images corresponding to keywords in the speech interaction for each of the keywords;
obtain an interaction partner image representing an interaction partner who interacts with the user before the interruption of the speech interaction; and
generate the icon image including the pre-interruption keyword image and the interaction partner image.

3. The speech interaction device according to claim 1 or 2, wherein
the recognition unit is configured to recognize, after the icon image is displayed, at least any one topic subject of conversation contents of the user, in-vehicle content played back in a vehicle, and a vehicle periphery target on a periphery of the vehicle, and
the image generation unit is configured to:
determine whether importance of the recognized topic subject is higher than an importance threshold value; and
update the icon image displayed to the user on a basis of a topic image representing the topic subject whose importance is determined to be higher than the importance threshold value.

4. The speech interaction device according to claim 1 or 2, wherein
the processor further comprises:
a driving state obtaining unit configured to obtain driving state information indicating a driving state of the user who drives a vehicle; and
a driving load estimation unit configured to estimate a driving load of the user on a basis of the driving state, and
the image generation unit is configured to:
determine whether the driving load is higher than a load threshold value; and
when determining that the driving load is higher than the load threshold value, generate the icon image having an amount of information according to the driving load.

5. A speech interaction method, executed by a processor, for controlling a speech interaction of a user, the processor operating to:
recognize interaction contents of the user before interruption of the speech interaction;
extract, on a basis of the interaction contents, a keyword in the speech interaction before the interruption as a pre-interruption keyword;
generate, on a basis of the extracted pre-interruption keyword, an icon image representing the interaction contents before the interruption; and
generate a control command to display the generated icon image.
